# EUROPEAN PATENT APPLICATION

(11) **EP 3 486 900 A1**
(43) Date of publication of application: **22.05.2019**
(21) Application number: 17306593.9
(22) Date of filing: 16.11.2017
(51) Int. Cl.: G10L 15/22

(54) **SYSTEM AND METHOD FOR DIALOG SESSION MANAGEMENT**

(71) Applicant: Softbank Robotics Europe, 75015 Paris (FR)
(72) Inventor: BILAC, Miriam, 75015 Paris (FR); CHAMOUX, Marine, 75015 Paris (FR); LIM, Angelica, Burnaby, British Columbia V5A 1S6 (CA)
(74) Representative: Bell, Mark

(57) **Abstract**

A robot or other conversational agent determines whether a human interlocutor has ceded the conversational floor by detecting the absence of a particular speech characteristic such as the introduction of filler speech at the end of an utterance, and the presence of a characteristic physical behaviour, such as the interlocutor returning their gaze to a focal point of the conversion, such as the robot's face, during a specified time window after the end of the utterance. Where this combination of characteristics is detected, the robot can determine that the conversational floor is open and that a response may be appropriate. This may trigger a conversational response for example via voice or text.

## Description

### Field of the invention

The present invention relates to voice user interfaces and conversational agents, and in particular the cession of control of dialog in conversational interaction sessions.

### Background of the invention

The information technology revolution that has taken place over the last fifty years or so has meant that many human activities now involve, and often revolve around the manipulation of information technology systems, and in particular computers. The nature of the interfaces supporting these interactions has evolved continually in parallel with the processing and telecommunications capacities of these systems, from punch cards, keyboards, mouse driven graphical user interfaces and most recently multi-touch touch screen interfaces, the richness and accessibility of information displayed to a user has increased, and the precision and facility of interactions improved. Nevertheless, such operations have systematically remained based on manual interaction with the devices in question.

Speech processing has made great strides over recent years, with interactive robots such as Pepper and voice interfaces such as Amazon Alexa, OK Google, Siri, and Cortana reaching the market. Yet robots still need improvements to converse as naturally as humans do. One issue, for instance, is that users must speak in a very specific way to interact with robots through speech. Users must speak clearly, without hesitation or pauses, preferably without any "umms" or "ah"s. Unfortunately, research indicates that humans emit these kinds of disfluencies an average of every 4.4 seconds, pausing to allow themselves time to think, for example. In these cases, a speech system could assume the human has finished speaking, and abruptly interrupt or process an incomplete idea. Various strategies exist to attempt to address this interruption issue. Many of today's voice services rely on automatic speech recognition and natural language understanding to detect if the user's command is complete, thus partially solving the interruption issue. In this case, however, if the user's input is composed of multiple sentences, only the first sentence will be processed; incremental dialog strategies can help here. Other systems simply allow the use of a button to end the speaking turn. In proactive dialogue systems, another way to avoid the issue is to ask specific, non open-ended questions such as "Which colour do you like better, red or blue?". More often than not, it is the human who adapts himself to the system, speaking in one breath a strung-together sequence that is "perfect", conforming their communication style to the machine's constraints.

Turn-taking has been studied since the late 1960's as part of human conversation analysis. It includes concepts such as conversational floor, which can be "held" or "relinquished" when a speaker continues to speak or ends their speaking turn, respectively. Another important concept is that of "overlaps", when one speaker's speech overlaps with that of the currently speaking person. Depending on the culture or region, overlaps may occur more or less often when conversing. Some overlaps are cooperative, for instance as a continuation of the interlocutor's speech or backchannels such as "uh huh". On the other hand, some overlaps are competitive, which we call interruptions in this paper. Seizing the speaking turn and changing the topic can be associated with displays of power, dominance, and threat. As such, it could be important for robots and Al to avoid these overlaps, lest they be perceived as dominating human speakers. Filled pauses or fillers, such as "uh" or "umm", are frequent in natural conversation and indicate thinking and/or a desire to continue speaking. The general consensus in the linguistic community is that these are not errors but a normal part of language and conversation. Relatedly, there exist also silent pauses between words or phrases, separating instalments of speech within a speaking turn.

Effectively identifying the moment at which an interlocutor cedes the conversational floor in automated systems is important to improve the fluency and efficiency of communications between human interlocutors and automated systems, with a view of reducing incidences of interruptions, repetitions and the like.

### Summary of the invention

In accordance with the present invention in a first aspect there is provided a method of detecting the cession of speaking turn by a human interlocutor in a dialog with a machine interface, comprising capturing a first intention indicator based on a first speech characteristic of the human interlocutor during an utterance from the human interlocutor, and detecting the termination of an utterance from the human interlocutor. When the termination of an utterance from the human interlocutor is determined, a second intention indicator is captured based on a body movement of the interlocutor. It is then determined whether the first intention indicator and the second intention indicator taken together are consistent with the human interlocutor ceding control of the dialog, and when it is determined that the first intention indicator and the second intention indicator taken together are consistent with the human interlocutor ceding control of the dialog, responding to the human interlocutor.

In a development of the first aspect the method comprises an additional step of capturing a third intention indicator based on a second speech characteristic of the interlocutor when the termination of an utterance from the human interlocutor is determined. The step of determining whether the first intention indicator and the second intention indicator taken together are consistent with the human interlocutor ceding control of the dialog comprises determining whether the first intention indicator and the second intention indicator and the third intention indicator taken together are consistent with the human interlocutor ceding control of the dialog.

In a further development of the first aspect the second intention indicator comprises one or more of a determination of the orientation of the gaze of the human interlocutor, a detection of a degree of physical proximity of the human interlocutor with respect to a focal point of the dialog, a detection of an orientation of the body of the human interlocutor with respect to a focal point of the dialog, a detection of an orientation of a specified body part of the human interlocutor with respect to a focal point of the dialog.

In a further development of the first aspect the determination of the orientation of the gaze of the human interlocutor comprises a determination that the gaze of the human interlocutor has reverted to a focal point of the dialog.

In a further development of the first aspect the first intention indicator or the third intention indicator comprises one or more of, an analysis of filler sound from the human interlocutor, a detection of the pitch of sound from the human interlocutor, or a semantic component of the utterance.

In a further development of the first aspect the first intention indicator is based predominantly on the speech characteristic towards the termination of the utterance.

In a further development of the first aspect the utterance is determined to terminate only in a case where the duration of a pause in the utterance is detected to have exceeded predetermined threshold duration.

In a further development of the first aspect the step of capturing the second intention indicator of the human interlocutor, is performed for a predetermined duration.

In a further development of the first aspect the step of determining whether the first intention indicator and the second intention indicator are consistent with the human interlocutor ceding control of the dialog, it is determined that the first intention indicator and the second intention indicator are not together consistent with the human interlocutor ceding control of the dialog, the method reverts to the step of detecting the termination of an utterance from the human interlocutor.

In accordance with the present invention in a second aspect there is provided a system for processing of material for injection in a dialog with a human interlocutor, the system comprising an input receiving a representation of a communication channel bearing an utterance from the human interlocutor, an output for conveying a representation of a communication channel bearing the material, and a processor adapted to process the representation to detect the termination of the utterance. The processor is further adapted in a case where the termination of an utterance from the human interlocutor is determined, to capture a first intention indicator based on a first speech characteristic of the human interlocutor and a second intention indicator based on a body movement of the human interlocutor, and determine whether the one or more intention indicators are consistent with the human interlocutor ceding control of the dialog, and in a case where it is determined that the one or more intention indicators are consistent with the human interlocutor ceding control of the dialog, initiating a response to the human interlocutor.

In a further development of the second aspect the system comprises a focal point perceivable by the human interlocutor, and a detector capable of determining an aspect of the human interlocutor's body movement relative the focal point as the second intention indicator.

In a further development of the second aspect the second intention indicator comprises one or more of a determination of the orientation of the gaze of the human interlocutor, a detection of a degree of physical proximity of the human interlocutor with respect to a focal point of the dialog, a detection of an orientation of the body of the human interlocutor with respect to a focal point of the dialog, a detection of an orientation of a specified body part of the human interlocutor with respect to a focal point of the dialog and the system further comprises a video input transducer and a gaze tracker adapted to determine the orientation of the gaze of the human interlocutor.

In a further development of the second aspect the first intention indicator or the third intention indicator comprise one or more of, an analysis of filler sound from the human interlocutor, a detection of the pitch of sound from the human interlocutor, or a semantic component of the utterance.

In accordance with the present invention in a third aspect there is provided a computer program comprising instructions adapted to implement the steps of the first aspect.

### Brief Description of the Drawings

The above and other advantages of the present invention will now be described with reference to the accompanying drawings, in which:
Figure 1a presents a scenario in which material for injection in a dialog with a human interlocutor is processed;
Figure 1b presents a first alternative of the scenario of figure 1 a;
Figure 1c presents a second alternative of the scenario of figure 1 a;
Figure 1d presents a third alternative of the scenario of figure 1 a;
Figure 2 illustrates corresponding gaze direction data as may be measured a different stages of a dialog;
Figure 3 shows a method detecting the cession of speaking turn by a human interlocutor in a dialog with a machine interface in accordance with an embodiment;
Figure 4 shows a method of detecting the cession of speaking turn by a human interlocutor in a dialog with a machine interface in accordance with a development of the embodiment of figure 3;
Figure 5 presents a system for detecting the cession of speaking turn by a human interlocutor in a dialog with a machine in accordance with an embodiment;
Figure 6 shows a generic computing system suitable for implementation of embodiments of the invention;
Figure 7 shows a robot adaptable to constitute an embodiment; and
Figure 8 shows a smartphone device adaptable to constitute an embodiment.

### Detailed description

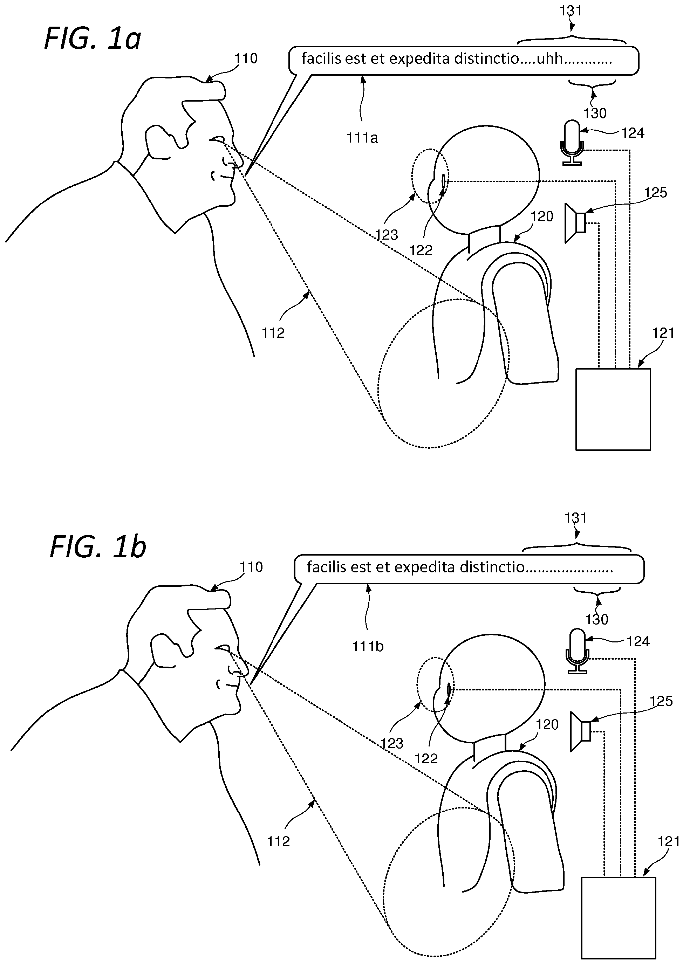

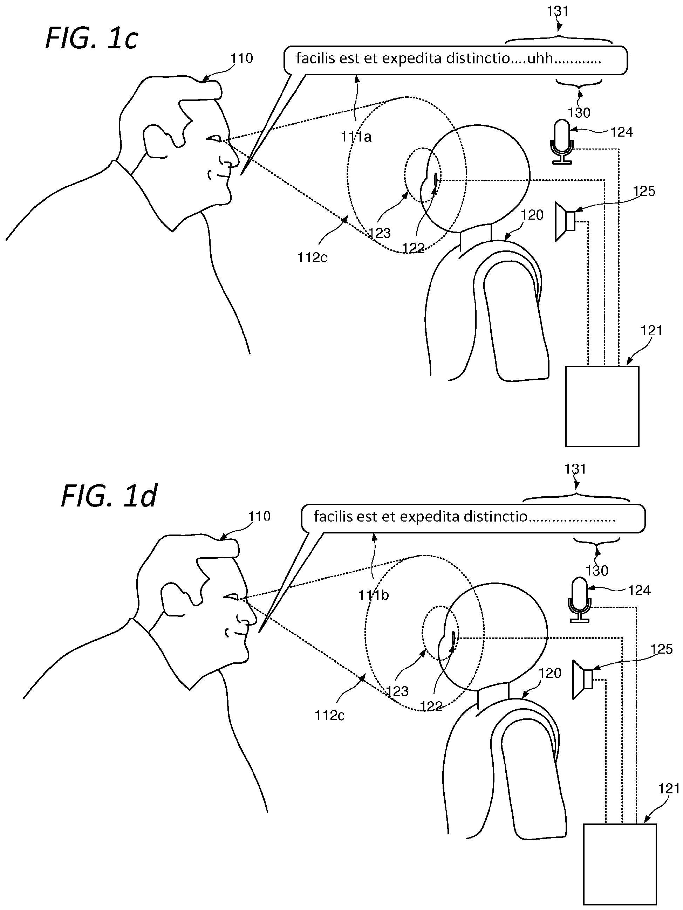

Figures 1a, 1b and 1c present stages a scenario in which material for injection in a dialog with a human interlocutor is processed. In particular, a robot 120 participates in a dialog with a human interlocutor 110. A processor of the robot seeks to identify the proper moment to prepare a contribution to the dialog, and to inject it into the conversation.

Figure 1 a presents a scenario in which material for injection in a dialog with a human interlocutor is processed. As shown in text bubble 111a, the human interlocutor has pronounced the utterance "facilis est et expedita distinctio......................uhh". The robot 122 is provided with a microphone 124, by means of which the utterance may be captured and rendered in a processable form, for example by analogue to digital conversion, filtering and other pre-processing as may be appropriate. In accordance with embodiments of the invention, this utterance may be processed continuously with a view to identifying the end of each utterance. The end of an utterance may be considered to coincide with the end of a continuous speech segment. An utterance is determined to terminate only in a case where the duration of a pause in the utterance is detected to have exceeded a predetermined threshold duration. The threshold duration may have any suitable value. For example, the threshold duration may lie between 50ms and 400 ms. A minimum pause duration of around 200ms has been found to offer good results for English speakers. The threshold duration may be determined dynamically as function of the interlocutor's speech characteristics. The threshold duration may be set with reference to context factors such as the language used, regional variations due to accent and the like, the maturity and competence of the speaker and so on.

An energy intensity threshold may also be defined, where sound input levels below this threshold are considered to belong to a pause period. The energy intensity level may be defined dynamically as a function of interlocutor voice level, the distance predicted or detected between the interlocutor and the focal point and/or microphone, background noise levels and other factors as appropriate.

As shown in figure 1a, the utterance ends with a period of silence 130, which enables the processor 121 to identify the termination of the utterance.

In the audio processing field, much study has already been done on detecting filled pauses. Filled pauses may be detected in real-time by tracking the fundamental frequency and spectral envelope of speech in Japanese as explained in the article by Masataka Goto, Katunobu Itou, and Satoru Hayamizu. 1999. A Real-time Filled Pause Detection System for Spontaneous Speech Recognition. In Proceedings of Eurospeech 1999. 227-230. More recently the Interspeech 2013 SVC dataset may be used to detect speech signals such as laughter and filled pauses as presented by Teun F Krikke and Khiet P Truong. 2013. In the article entitled "Detection of nonverbal vocalizations using Gaussian Mixture Models: looking for fillers and laughter in conversational speech. (2013)."

As such, while the utterance 111a may be determined to have terminated, it may be also be determined that a first intention indicator in the form of filler speech occurred towards the end of the utterance.

As such, a first intention indicator may comprise one or more of an analysis of filler sound from the human interlocutor, a detection of the pitch of sound from the human interlocutor, or a semantic component of the utterance. In particular, falling pitch at the end of an utterance can be taken as an indicator of the user's intention to relinquish the conversational floor, while flat pitch is a signal that the speaker wants to keep the floor. The presentation of an utterance that is syntactically or conceptually complete be taken as an indicator of the user's intention to relinquish the conversational floor. A given word or syllable may be pronounces more slowly at the end of a speaking turn. A number of such intention indicators may be used in parallel. The first intention indicator may comprise any combination of some or all of these factors.

The presence of filler may be taken to constitute a first intention indicator, which is based on a first speech characteristic of the interlocutor. In particular, the presence of filler at the end of an utterance may be taken as an indicator that the human interlocutor does not intend to cede the conversational floor. It will be appreciated that many other such first intention indicators based a speech characteristic of the interlocutor may be considered. For example, an analysis of filler sound from the human interlocutor, a detection of the pitch of sound from the human interlocutor, or a semantic component of the utterance.

In certain embodiments, a time window 131 of a predetermined duration at the end of an utterance (but during the utterance) may be assessed for the detection of such first intention indicators.

It may be noted that as shown in figure 1a the gaze 112 of the interlocutor 110 is directed downward and to the right, away from a focal region 123 corresponding to the robot's face. This fact may be detected by a gaze tracking system which as shown is integrated with the robot's video system, based on video cameras in the position of the robot's "eyes".

In conversation between humans, gaze has been identified as a way to indicate the end of a speaking turn. As discussed in the article by Sean Andrist, Xiang Zhi Tan, Michael Gleicher, and Bilge Mutlu. 2014. entitled "Conversational gaze aversion for humanlike robots. In Proceedings of the 2014 ACM/IEEE international conference on Human-robot interaction". ACM, 25-32 and the article by Simon Ho, Tom Foulsham, and Alan Kingstone. 2015. entitled "Speaking and listening with the eyes: gaze signalling during dyadic interactions. PloS one 10, 8 (2015), e0136905, humans will typically look up, to the side, or down while thinking, and then return their gaze to their interlocutor when they are finished speaking. A thorough review of gaze in conversation can be found in [Federico Rossano. 2012. Gaze in Conversation. In The Handbook of Conversation Analysis, Jack Sidnell and Tanya Stivers (Eds.). John Wiley and Sons, Ltd, Chichester, UK, Chapter 15, 308-329].

People tend to break eye contact at the beginning of the utterance to claim their turn and focus on formulating the answer when talking to other humans. At the end of their response, speakers often look at the listener to signal that they finished their answer and that they invite the listener to take the conversational floor.

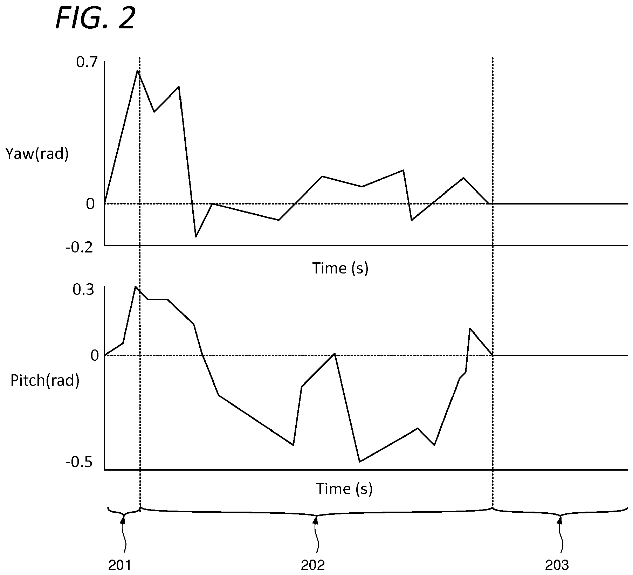

Figure 2 illustrates corresponding gaze direction data as may be measured a different stages of a dialog.

The response starts with a thinking phase 201 accompanied by a rise in gaze direction yaw and pitch values. The middle phase 202 is the human's verbal reply with occasional pitch value changes. At the end the participant looks back 203 to the robot, thus giving up the conversational floor in favour of the robot. This may be used as the basis of a turn-taking strategy- the gaze detector may track the gaze information only during the most relevant time, e.g. after the end of the utterance. A period of 1.5 seconds after the end of an utterance has been found to constitute an effective window for this determination for voice user interfaces or conversational agents in general. As will be appreciated from figure 2, the interlocutors gaze direction may vary considerably during this period. As such, the second intention indicator may be based on an average or smoothed value over a measurement period. Gaze direction after the end of a speech utterance, may thus be considered to distinguish whether the interlocutor is trying to keep or relinquish the conversational floor. In short, this system may calculate whether the human was looking at the robot or not. With reference to an estimated gaze direction, an angle of plus or minus 0.15 radians may be used as a threshold inside which the interlocutor may be considered to be looking at robot, and outside of which the interlocutor may be said to be averting their gaze. The gaze direction threshold may be determined dynamically on the basis of the behaviour of a particular interlocutor. It may also take into account a detected or measured distance between the interlocutor and the focal point, and/or the size of the focal point.

As such, gaze direction may be taken to constitute a second intention indicator, which is based on a body movement of the interlocutor. In particular, the determination that the gaze of the human interlocutor has not reverted to "meet the gaze" of the robot may be taken as an indicator that the human interlocutor does not intend to cede the conversational floor. It will be appreciated the "meeting the gaze" of the robot may correspond to the human interlocutor's gaze being directed to any arbitrarily defined region. This region may correspond to a representation of a face, or of eyes on the robot, or may correspond to a display or other focal point. Although as presented in figure 1 the video cameras that provide video input to the robot and support its gaze tracking functions are situated in a manner to resemble eyes in the face of a human being, there is no need for this to be the case in all embodiments.

Accordingly, the determination of the orientation of the gaze of the human interlocutor may comprise a determination that the gaze of the human interlocutor has reverted to a focal point of the dialog.

Various systems are used to track eye movements, which may be adapted to implement this functionality. Any such system may be used, including head-mounted, table-based, or remote systems. These devices commonly use video-cameras and processing software to compute the gaze position from the pupil/corneal reflection of an infra-red emissive source. To increase data accuracy with table devices, it is possible to limit head movement with a fixed chin on the table. A calibration process is also common, to ensure system accuracy. The calibration process usually consists of displaying several points in different locations of the viewing scene; the Eye Tracking software will compute a transformation that processes pupil position and head location. Table-based eye trackers are usually binocular and can thus calculate eye divergence and output raw coordinates of the Gaze Intersection Point (GIP) in x-y pixels applied to a screen in real-time. This feature allows integration of gaze position as an input for the HMI. Areas Of Interest (AOIs) are then defined to interact with the user. When the gaze meets an AOI an event is generated and a specific piece of information will be sent. When an AOI is an element of the interface with some degree of freedom (a scrollbar, for instance), one is talking about a dynamic AOI (dAOI). Tracking of a dAOI is more challenging compared to a static one.

In some embodiments the gaze direction may simply be taken to be the instantaneous point of regard, that is, whatever point the eye tracking system considers the user to be looking at the instant the input is received. In certain embodiments, the determination of the point of attention of the user may involve determining a weighted average of the users point of regard over a predetermined duration- further embodiments are described hereafter.

It will be appreciated that many other such intention indicators based on a body movement of the interlocutor may be considered. For example, a detection of a degree of physical proximity of the human interlocutor with respect to a focal point of the dialog, a detection of an orientation of the body of the human interlocutor with respect to a focal point of the dialog, a detection of an orientation of a specified body part of the human interlocutor such as head angle with respect to a focal point of the dialog, or an eye opening degree of the human interlocutor.

In particular, speakers tend to avert their gaze or tilt their head to claim their turn and focus on formulating the answer, while at the end of their response they often look at the listener to signal that they finished their answer and that they invite the listener to take the conversational floor. People tend to approach the robot with their upper body when starting a response and move away to their initial position in the end of a speaking turn. As such head angle may comprise a component of the second intention indicator.

At the end of their speaking turn, people turn their ear toward the robot to concentrate on the robot answer. As such head orientation may comprise a component of the second intention indicator.

The end of a speaking turn is often accompanied by the end of a hand gesture. As such characteristic hand movements may comprise a component of the second intention indicator.

People tend to be more still when listening then when speaking. As such general interlocutor movement level may comprise a component of the second intention indicator.

Facial action units may comprise a component of the second intention indicator. For instance narrowing the eyes can be taken as a thinking behavior of the user which indicates he wants to keep the floor.

In the scenario of figure 1a, the fact that the human interlocutor included a filler at the end of their utterance, and the fact that their gaze remains averted from the focal region corresponding to the robot's face may be taken as consistent with the interlocutor not intending to cede the floor , and it may be concluded that the interlocutor does not intend to cede the floor.

Figure 1b presents a first alternative of the scenario of figure 1 a.

Figure 1b is identical to figure 1a, except that as shown in text bubble 111b, the human interlocutor has pronounced the utterance " facilis est et expedita distinctio............". That is to say, no filler is apparent during the time window 131. On this basis, while the fact that the human interlocutor included no filler at the end of their utterance might have been taken to indicate that the interlocutor did not intend to retain the floor, the fact that their gaze remains averted from the focal region corresponding to the robot's face may be taken as an indicator that they in fact do not intend to cede the floor, and it may be concluded that the interlocutor does not intend to cede the floor.

Figure 1c presents a second alternative of the scenario of figure 1 a.

Figure 1c is identical to figure 1a, except that the gaze 112c of the human interlocutor 110 coincides with a focal region 123, which as shown is associated with the face of the robot 120.

On this basis, while the fact that the human interlocutor included filler at the end of their utterance might have been taken to indicate that the interlocutor did intend to retain the floor, the fact that their gaze reverts to the focal region corresponding to the robot's face may be taken as an indicator that they do intend to cede the floor, and it may be concluded that the interlocutor does not intend to cede the floor.

Figure 1d presents a third alternative of the scenario of figure 1 a.

Figure 1d is identical to figure 1a, except that as shown in text bubble 111b, the human interlocutor has pronounced the utterance " facilis est et expedita distinctio............". That is to say, no filler is apparent during the time window 131. Furthermore, the gaze 112c of the human interlocutor 110 coincides with a focal region 123, which as shown is associated with the face of the robot 120.

On this basis, the fact that the human interlocutor included no filler at the end of their utterance been taken to indicate that the interlocutor did intend to cede the floor, and the fact that their gaze reverts to the focal region corresponding to the robot's face may be taken together as consistent with the human interlocutor ceding control of the dialog, and it may be concluded that the interlocutor does intend to cede the floor.

On the basis of the different scenarios explored in figures 1a, 1b, 1c and 1d, a method may be provided for of machine processing of material for injection in a dialog with a human interlocutor.

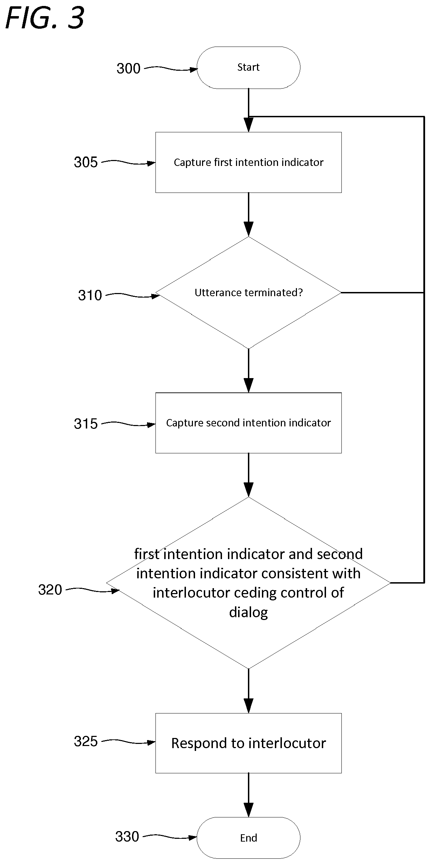

Figure 3 shows a method detecting the cession of speaking turn by a human interlocutor in a dialog with a machine interface in accordance with an embodiment.

As shown, the method starts at step 300 before proceeding to step 305 at which a first intention indicator based on a first speech characteristic of the interlocutor is captured during an utterance from the human interlocutor, for example as discussed with reference to figures 1a, 1b, 1c and 1d above. At step 310 it is determined whether the utterance has terminated, and in a case where the utterance is not terminated, the method reverts to step 305. In a case where the utterance is determined to have terminated at step 310, the method proceeds to step 315 at which a second intention indicator based on a body movement of the interlocutor is captured.

The capture of the second intention indicator of the human interlocutor, may be performed for a predetermined duration, or until a complete measurement is obtained, or until a required degree of convergence or confidence is achieved, or otherwise.

The method next proceeds to step 320 at which it is determined whether the first intention indicator and the second intention indicator taken together are consistent with the human interlocutor ceding control of the dialog. If it is determined at step 320 that the first intention indicator and the second intention indicator taken together are consistent with the human interlocutor ceding control of said dialog, the method proceeds to step 325 at which the material may be injected into the dialog. If it is determined that the first intention indicator and the second intention indicator are not together consistent with the human interlocutor ceding control of the dialog, the method reverts to step 305 of detecting the termination of an utterance from the human interlocutor, which in the present embodiment is reached via the step 305.

As discussed with figures 1a, 1b, 1c and 1d a binary approach has been suggested where both the first intention indicator and the second intention must correspond the human interlocutor wishing to cede control of the conversational floor for the robot to take possession of the conversational floor. It will be appreciated that in some embodiments either or both the first intention indicator or the second intention indicator may be non binary.

In a case where it is determined that the first intention indicator and the second intention indicator taken together are consistent with the human interlocutor ceding control of the dialog the method proceeds to step 325 at which the system responds to the human interlocutor. This response may be compiled on the basis of the utterance of the interlocutor in the present iteration and/or any previous utterance, as well any external stimuli, or may be entirely independent of the interlocutors utterances. The response may take the form of speech, and/or any other action that the system may be capable of performing. Material need not be injected immediately on determining that the interlocutor has ceded the conversational floor, and indeed may not even be defined at that time. In certain embodiments, there may be additional steps of processing the interlocutor's comments and generating the material as a consequence thereof prior to performing the response.

It will be appreciated that the steps described above may be modified without changing their logical significance. For example, in some embodiments the incoming audio may be buffered, and the audio may be assessed to determine the presence of the first intention indicator may be performed retroactively on the buffered data once the end of the utterance is detected at step 310. This does not necessarily suggest a restructuring of the flowchart of figure 3 since the first intention indicator may still in some cases be considered to be captured at the time it is buffered, even if its assessment is performed later. In some embodiments, the step of capturing the first intention indicator may comprise a sub step of assessing audio data to extract the first intention indicator, which may occur either before or after the end of the utterance is detected at step 310.

The combined consideration of a first intention indicator based on a first speech characteristic of the interlocutor on one hand and of a second intention indicator based on a body movement of the interlocutor on the other has been found to be particularly effective in gauging a human interlocutor's true intentions with respect to ceding the conversational floor. This tends to lead to fewer incidences of repetition by the human interlocutor in the face of an absence of response from the robot, fewer incidences of inappropriate interruption of the human interlocutor by the robot, and correspondingly longer utterances from human interlocutors. The structured approach detecting a first intention indicator based on a first speech characteristic at the end of utterances and considering the second intention indicator based on a body movement after utterances are considered to terminate produces these benefits while constraining demands on processor, memory, energy and other system resources.

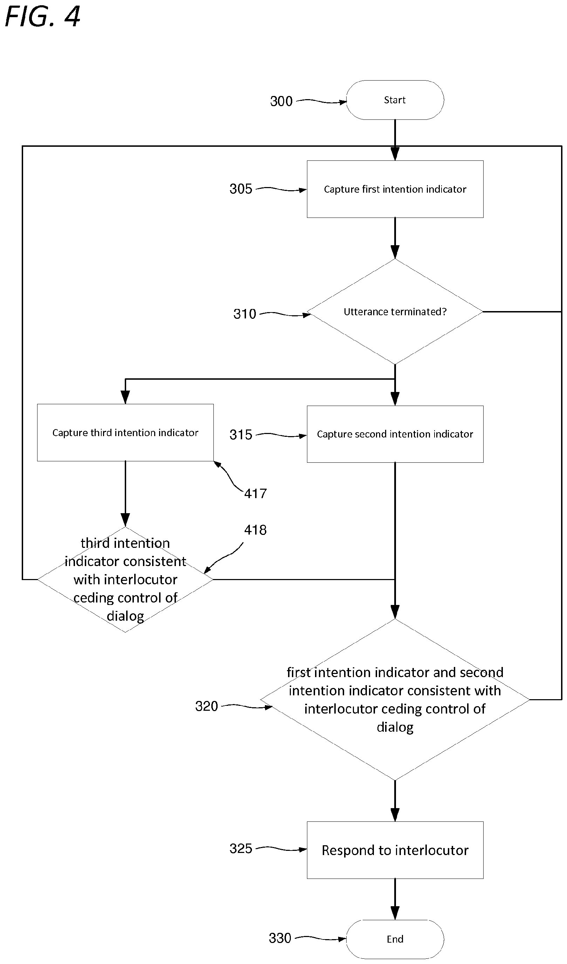

Figure 4 shows a method of detecting the cession of speaking turn by a human interlocutor in a dialog with a machine interface in accordance with a development of the embodiment of figure 3.

As shown in figure 3, once the termination of an utterance is detected at step 310, the method proceeds to step 315 as described above and additional step 417 in parallel. At step 417 a third intention indicator based on a second speech characteristic of the interlocutor is captured. From step 417 the method proceeds to step 418 at which it is determined whether the third intention indicator is consistent with the human interlocutor ceding control of the dialog.

The third intention indicator may comprise the detection of any speech from the human interlocutor after the end of the utterance. As such, the step of detecting the second intention indicator may comprise additionally detecting further utterances from the human interlocutor, and where any such further utterances are detected, reverting to the step of detecting the termination of an utterance from the human interlocutor, which in the present embodiment is reached via step 305.

Such new speech may be taken to indicate a recuperation of the stage by the human interlocutor regardless of their apparent intentions as suggested by the first and second intention indicators.

As such, if it is determined at step 418 that the third intention indicator is not consistent with the human interlocutor ceding control of the dialog, the method reverts to step 305. Otherwise, the method proceeds to step 320 as discussed with respect to figure 3.

It will be appreciated that steps 320 and 418 may be combined in a single step wherein the step of determining whether the first intention indicator and the second intention indicator taken together are consistent with the human interlocutor ceding control of the dialog further comprises determining whether the first intention indicator and the second intention indicator and the third intention indicator taken together are consistent with the human interlocutor ceding control of the dialog.

As such, a third intention indicator may comprise one or more of an analysis of filler sound from the human interlocutor, a detection of the pitch of sound from the human interlocutor, or a semantic component of the utterance.

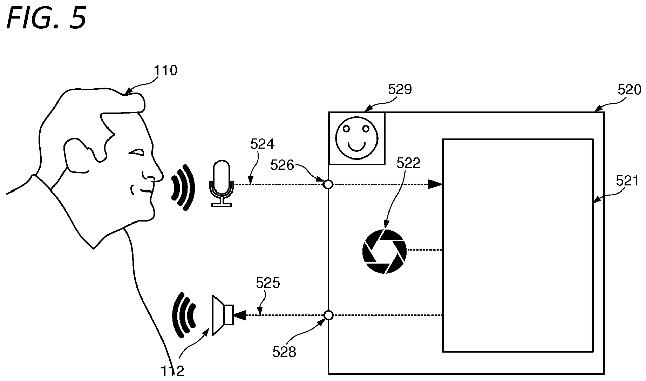

Figure 5 presents a system for detecting the cession of speaking turn by a human interlocutor in a dialog with a machine in accordance with an embodiment.

As shown, the system 520 comprises an input 526 receiving a representation of a communication channel 524 bearing an utterance from a human interlocutor 110, an output 525 for conveying a representation of a communication channel bearing the material, a processor 521 adapted to process the representation to detect the termination of the utterance.

The processor 521 is further adapted in a case where the termination of an utterance from the human interlocutor 110 is determined, to capture a first intention indicator based on a first speech characteristic of the interlocutor and a second intention indicator based on a body movement of the interlocutor, and determine whether the one or more intention indicators are consistent with the human interlocutor ceding control of the dialog, and in a case where it is determined that the one or more intention indicators are consistent with the human interlocutor ceding control of the dialog, to respond to the interlocutor, for example as discussed above, for example with respect to figures 3 or 4.

In accordance with certain optional variants, the system of figure 5 may comprises a focal point 529 perceivable by the interlocutor 110, and a detector 522 capable of determining an aspect of the interlocutor's body movement relative the focal point as the second intention indicator. By way of example, the detector 522 may comprise the video camera 122 as discussed above.

In accordance with certain optional variants of the system of figure 5, the second intention indicator may comprise one or more of a determination of the orientation of the gaze of the human interlocutor, a detection of a degree of physical proximity of the human interlocutor with respect to a focal point of the dialog, a detection of an orientation of the body of the human interlocutor with respect to a focal point of the dialog, a detection of an orientation of a specified body part of the human interlocutor with respect to a focal point of the dialog. The system may further comprise a video input transducer 522 and a gaze tracker adapted to determine the orientation of the gaze of the human interlocutor. Such a gaze tracker may be implemented as a standalone system, or using data from existing systems such as a video camera, as discussed above. Gaze tracking processing on this data may be performed by hardware or software or a combination of the two.

In accordance with certain optional variants of the system of figure 5, the first intention indicator or the third intention indicator may comprise one or more of, an analysis of filler sound from the human interlocutor, a detection of the pitch of sound from the human interlocutor, or a semantic component of the utterance.

While Figures 1a, 1b, 1c and 1d have been described with respect to a robot 120, which incorporates the various operational systems mentioned such as video camera 122, microphone 124, loudspeaker 125, processor 121, and focal area 123, it will be appreciated that embodiments of the invention may take the form of any suitable distribution of operational elements. In some embodiments the focal point may resemble a humanoid face to some degree. For example, it may comprise two points representing eyes. It may additionally comprise representations of a mouth or nose. In some cases these features may coincide with functional components, which may or may not correspond to the function of the respective facial feature (eyes to video input, mouth to audio transducer etc), or alternatively may be mere graphical representations for some or all elements. The representation may be more or less like a human face, and in some cases may additionally represent features such as skin tone, texture etc. The representation may represent an animal, fantastical creature or mechanical entity. The representation may be presented in whole or in part on a graphical display. On the other hand, the focal area might comprise any arbitrary visible feature. For example, it may simply comprise a spot on a wall, a grille, window or a region that might be identifiable by digital means, for example via virtual or augmented reality. By the same token the focal area need not be defined in physical space, but exist only in a three dimensional computer generated space.

The other elements such as video camera 122, microphone 124, loudspeaker 125 may be located anywhere in relation to this focal area. Multiple video cameras, microphones , or loudspeakers may be provided, and these may operate either independently as a function of whichever is best situated with respect to the interlocutor, or signals from or to some or all of each example of a particular type of device may be processed together so as to achieve optimal results. For example, signals from multiple microphones, which may be distributed in space, may be processed together so as to exclude background noise, and the like.

The second intention indicator based on a body movement of the interlocutor has been presented above as being captured via the video input 122, however depending on the nature of the body movement in question, other sensors may be provided. For example LIDAR, sonic, infrared or any other suitable sensor may be provided depending on the body movement to be detected.

It will be appreciated that the first intention indicator, and/or the second intention indicator, and/or the third indicator may be compiled on the basis of a plurality of respective inputs. The first intention indicator, and/or the third intention indicator may be compiled on any combination of suitable speech characteristics including any of those presented above, and the second intention indicator may be compiled on any combination of suitable body movement characteristics including any of those presented above.

According to certain embodiments a robot or other conversational agent determines whether a human interlocutor has ceded the conversational floor by detecting the absence of a particular speech characteristic such as the introduction of filler speech at the end of an utterance, and the presence of a characteristic physical behaviour, such as the interlocutor returning their gaze to a focal point of the conversion, such as the robot's face, during a specified time window after the end of the utterance. Where this combination of characteristics is detected, the robot can determine that the conversational floor is open and that a response may be appropriate. This may trigger a conversational response for example via voice or text.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system.

A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

In some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a computer or any other device with processing capability, such as a robot or other connected device.

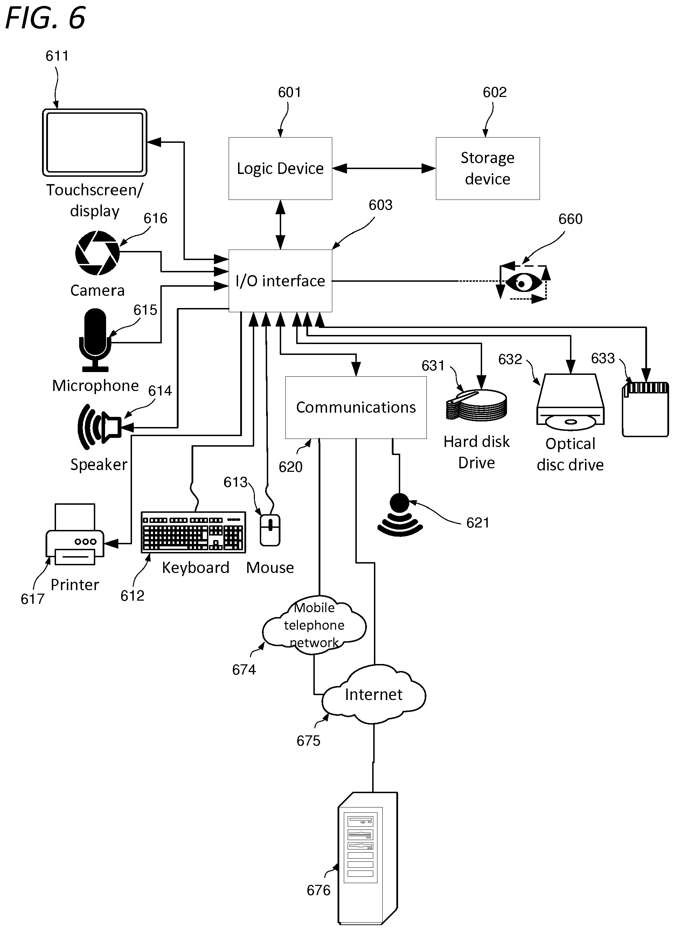

Figure 6 shows a generic computing system suitable for implementation of embodiments of the invention.

A shown in figure 6, a system includes a logic device 601 and a storage device 602. The system may optionally include a display subsystem 611, input subsystem 612, 613, 614, communication subsystem 620, and/or other components not shown.

Logic device 901 includes one or more physical devices configured to execute instructions. For example, the logic device 601 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 601 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 601 optionally may be distributed among two or more separate devices, which may be remotely located and/or configured for coordinated processing. Aspects of the logic device 601 may be virtualized and executed by remotely accessible, networked computing devices configured in a cloud-computing configuration.

Storage device 602 includes one or more physical devices configured to hold instructions executable by the logic device to implement the methods and processes described herein. When such methods and processes are implemented, the state of storage 902 device may be transformed-e.g., to hold different data.

Storage device 602 may include removable and/or built-in devices. Storage device 602 may comprise one or more types of storage device including optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 603 adapted to support communications between the Logic device 601 and further system components. For example, additional system components may comprise removable and/or built-in extended storage devices. Extended storage devices may comprise one or more types of storage device including optical memory 632 (e.g., CD, DVD, HD-DVD, Blu-Ray Disc, etc.), semiconductor memory 633 (e.g., RAM, EPROM, EEPROM, FLASH etc.), and/or magnetic memory 631 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 601 and storage device 602 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

The system comprises eye tracking hardware which may correspond to elements 122, 522, as described above. This hardware may be an integral component of the system or a peripheral. Its functionality may be supported or enhanced by software running on the logic device 601 or otherwise.

In particular, the system of figure 6 may be used to implement embodiments of the invention.

For example a program implementing the steps described with respect to figure 3 or 4 may be stored in storage device 602 and executed by logic device 601. Data received from the Human interlocutor, data to be injected into the dialog, movement data and/or the users gaze direction may be stored in storage 602 or the extended storage devices 632, 633 or 631. The Logic device 601 may use data received from the camera 616 or eye tracking system 660 to determine the users gaze direction, and the display 611 may provide the functionality the output for dialog, and/or as the focal point.

Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

When included, display subsystem 611 may be used to present a visual representation of data held by storage device. This visual representation may take the form of a graphical user interface (GUI). As the herein described methods and processes change the data held by the storage device 602, and thus transform the state of the storage device 602, the state of display subsystem 611 may likewise be transformed to visually represent changes in the underlying data. Display subsystem 611 may include one or more display devices utilizing virtually any type of technology. Such display devices may be combined with logic device and/or storage device in a shared enclosure, or such display devices may be peripheral display devices.

When included, input subsystem may comprise or interface with one or more user-input devices such as a keyboard 612, mouse 611, touch screen 611, or game controller, button, footswitch, etc. (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, colour, stereoscopic, and/or depth camera for machine vision and/or gesture recognition; a head tracker, eye tracker 660, accelerometer, and/or gyroscope for motion detection and/or intent recognition; as well as electric-field sensing componentry for assessing brain activity.

When included, communication subsystem 620 may be configured to communicatively couple computing system with one or more other computing devices. For example, communication module of may communicatively couple computing device to remote service hosted for example on a remote server 676 via a network of any size including for example a personal area network, local area network, wide area network, or the internet. Communication subsystem may include wired and/or wireless communication devices compatible with one or more different communication protocols. As non-limiting examples, the communication subsystem may be configured for communication via a wireless telephone network 674, or a wired or wireless local- or wide-area network. In some embodiments, the communication subsystem may allow computing system to send and/or receive messages to and/or from other devices via a network such as the Internet 675. The communications subsystem may additionally support short range inductive communications 621 with passive devices (NFC, RFID etc).

The system of figure 6 is intended to reflect a broad range of different types of information handling system. It will be appreciated that many of the subsystems and features described with respect to figure 6 are not required for implementation of the invention, but are included to reflect possible systems in accordance with the present invention. It will be appreciated that system architectures vary widely, and the relationship between the different subsystems of figure 6 is merely schematic, and is likely to vary in terms of layout and the distribution of roles in systems. It will be appreciated that, in practice, systems are likely to incorporate different subsets of the various features and subsystems described with respect to figure 6.

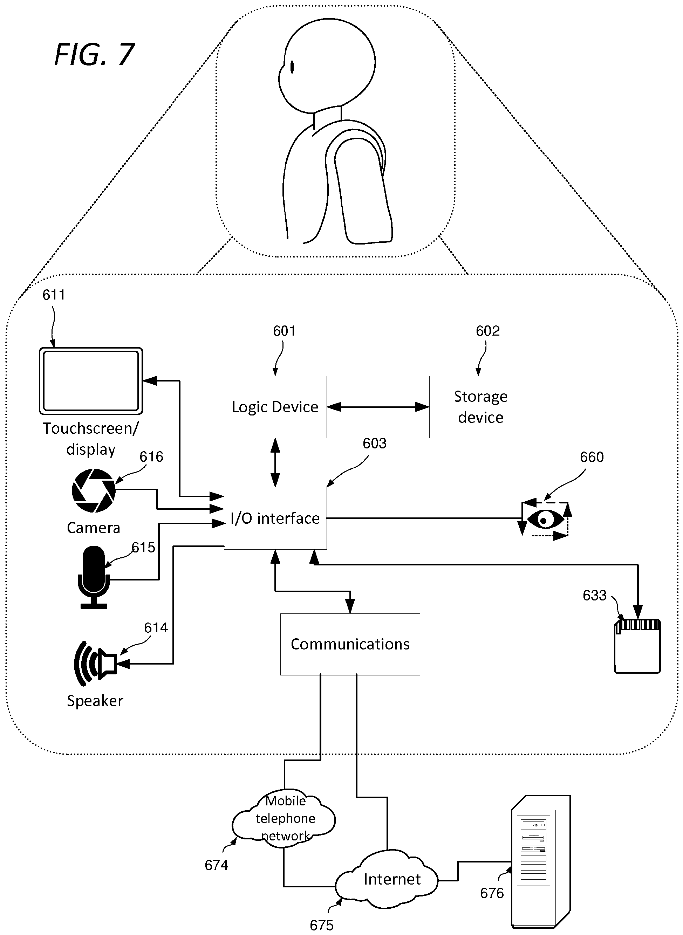

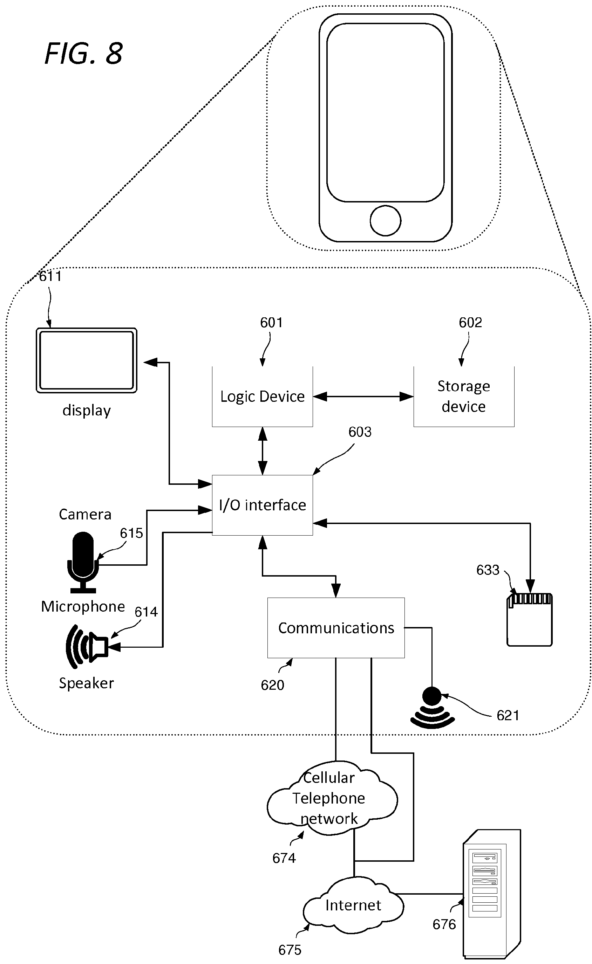

Figures 7 and 8 disclose further example devices in accordance with the present invention. Those of ordinary skill in the art will appreciate that systems may be employed in the future which also operate in accordance with the present invention.

Figure 7 shows a robot adaptable to constitute an embodiment. As shown in figure 7, the robot comprises elements 601, 602, 603, 611, 620, 631, 633, 614, 615, 616, 660, and 621 as described above. It may be in communication with a server 676 via the mobile telephone network 674 or internet 675. Alternative communication mechanisms such as a dedicated network or Wi-Fi may also be used. On the other hand, elements 612, 613, 632, 621, 617, 6 may be omitted. Although shown as a humanoid robot, the robot may similarly be a robot mower, vacuum cleaner, or any type of domestic, social or industrial robot.

Figure 8 shows a smartphone device adaptable to constitute an embodiment. As shown in figure 8, the smartphone device incorporates elements 601, 602, 603, 620, optional near field communications interface 621, flash memory 633 and elements 614, 615, 616, 640 and 611 as described above. It is in communication with the telephone network 674 and a server 676 via the network 675. Alternative communication mechanisms such as a dedicated network or Wi-Fi may also be used. The features disclosed in this figure may also be included within a tablet device as well.

It will be appreciated that embodiments of the invention are adaptable to countless further contexts where the parsing of free human speech is required. For example, intelligent personal assistant interfaces on network speaker devices, vehicles, and so on.

It will be appreciated that not all of the elements need be provided in the same location- for example, while audio input and output elements, elements able to detect movements of the human interlocutors and optionally the focal point may be provided locally to the human interlocutor, any of the other functions may be implemented remotely.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method of detecting the cession of speaking turn by a human interlocutor in a dialog with a machine interface, said method comprising:
capturing a first intention indicator based on a first speech characteristic of said human interlocutor during an utterance from said human interlocutor,
detecting the termination of said utterance from said human interlocutor,
when the termination of an utterance from said human interlocutor is determined, capturing a second intention indicator based on a body movement of said human interlocutor,
and determining whether said first intention indicator and said second intention indicator taken together are consistent with said human interlocutor ceding control of said dialog, and
when it is determined that said first intention indicator and said second intention indicator taken together are consistent with said human interlocutor ceding control of said dialog, responding to said human interlocutor.

2. The method of claim 1 comprising an additional step of, when the termination of an utterance from said human interlocutor is determined, capturing a third intention indicator based on a second speech characteristic of said human interlocutor, and wherein said step of determining whether said first intention indicator and said second intention indicator taken together are consistent with said human interlocutor ceding control of said dialog comprises determining whether said first intention indicator and said second intention indicator and said third intention indicator taken together are consistent with said human interlocutor ceding control of said dialog.

3. The method of any preceding claim wherein said second intention indicator comprises one or more of a determination of the orientation of the gaze of said human interlocutor, a detection of a degree of physical proximity of said human interlocutor with respect to a focal point of said dialog, a detection of an orientation of the body of said human interlocutor with respect to a focal point of said dialog, a detection of an orientation of a specified body part of said human interlocutor with respect to a focal point of said dialog.

4. The method of claim 3 wherein said determination of the orientation of the gaze of said human interlocutor comprises a determination that the gaze of said human interlocutor has reverted to a focal point of said dialog.

5. The method of any preceding claim wherein said first intention indicator or said third intention indicator comprises one or more of, an analysis of filler sound from said human interlocutor, a detection of the pitch of sound from said human interlocutor, or a semantic component of said utterance.

6. The method of any preceding claim wherein said first intention indicator is based predominantly on said speech characteristic towards the termination of said utterance.

7. The method of any preceding claim wherein an utterance is determined to terminate only in a case where the duration of a pause in the utterance is detected to have exceeded a predetermined threshold duration.

8. The method of any preceding claim wherein said step of capturing said second intention indicator of said human interlocutor, is performed for a predetermined duration.

9. The method of any preceding claim wherein when at said step of determining whether said first intention indicator and said second intention indicator are consistent with said human interlocutor ceding control of said dialog, it is determined that said first intention indicator and said second intention indicator are not together consistent with said human interlocutor ceding control of said dialog, said method reverts to said step of detecting the termination of an utterance from said human interlocutor.

10. A System for detecting the cession of speaking turn by a human interlocutor a dialog with a human interlocutor, said system comprising:
an input receiving a representation of a communication channel bearing an utterance from said human interlocutor,
an output for conveying a representation of a communication channel bearing said material,
a processor adapted to process said representation to detect the termination of said utterance,
said processor being further adapted in a case where the termination of an utterance from said human interlocutor is determined, to capture a first intention indicator based on a first speech characteristic of said human interlocutor and a second intention indicator based on a body movement of said interlocutor, and
determine whether said one or more intention indicators are consistent with said human interlocutor ceding control of said dialog, and
in a case where it is determined that said one or more intention indicators are consistent with said human interlocutor ceding control of said dialog, initiating a response to said human interlocutor.

11. The system of claim 10 wherein said system comprises a focal point perceivable by said interlocutor, and a detector capable of determining an aspect of said interlocutor's body movement relative said focal point as said second intention indicator.

12. The system of any of claim 10 or 11 wherein said second intention indicator comprises one or more of a determination of the orientation of the gaze of said human interlocutor, a detection of a degree of physical proximity of said human interlocutor with respect to a focal point of said dialog, a detection of an orientation of the body of said human interlocutor with respect to a focal point of said dialog, a detection of an orientation of a specified body part of said human interlocutor with respect to a focal point of said dialog and said system further comprises a video input transducer and a gaze tracker adapted to determine the orientation of the gaze of said human interlocutor.

13. The system of any of claims 10 to 12 wherein said first intention indicator or said third intention indicator comprises one or more of, an analysis of filler sound from said human interlocutor, a detection of the pitch of sound from said human interlocutor, or a semantic component of said utterance.

14. A computer program comprising instructions adapted to implement the steps of any of claims 1 to 9.
